# EUROPEAN PATENT SPECIFICATION

(11) **EP 0 544 971 B1**
(45) Date of publication and mention of the grant of the patent: **05.02.1997**
(21) Application number: 91830528.5
(22) Date of filing: 02.12.1991
(51) Int. Cl.: F21V 8/00

(54) **Grave slabs lighting system for cemeterial burial niches**
Beleuchtungssystem für die Abschlussplatten von Bestattungsnischen
Système d'éclairage pour les plaques de fermeture des niches de cimetière

(43) Date of publication of application: 09.06.1993
(73) Proprietor: SERTEC SYSTEM LIMITED, Dublin 2 (IE)
(72) Inventor: Paselli, Carlo, London SW11 5LP (GB)
(74) Representative: Jorio, Paolo

(56) References cited:
- EP-A- 0 394 099
- DE-A- 3 434 536
- US-A- 3 536 908

## Description

The invention refers to a new system, to lighten cemetery burial niches with light sources coming into grave slabs sockets put on wall for blocking the burial niches, which principally realizes a basic structural simplification and a major reliability giving the solution to the different problems existing in the actual plants. Consequently the invented system permits a substantial reduction of the realization and upkeeps plants costs, moreover the same is particularly suitable for manual and/or automatic check from information centre plants.

The actual energy distribution systems for electric energy delivery, said "votive lights", for the cemetery burial grave slabs, including flanked and superimposed burial niches, provide initially a distribution network to bring energy from the public delivery point to the mount points of some burial niches series including one or more risers. Actually in each of said mount points it is necessary to seat a suitable box, or to provide a niche, to lodge in a protected position a transformer and the pertinent fuses to bring the energy from high to low voltage so to avoid damages for persons. From said box it goes away a conductors network on which ends are then put the sockets for the final application of the lamps. The above indicated system involves, besides the necessity of interventions and fabrication parts, different drawbacks: a) it is possible to have electric contacts and in particular to occur oxidation on the junctions; b) it is possible to determine short circuits and electric shock; c) it is difficult to look for system faults again and consequently it has leakage current; d) it is possible a sockets oxidation with consequent decay of the system and its eventual breakage; e) it is possible the lamps unscrewing owing to metal dilatation; f) it is possible a differentiated luminous intensity. For all the above indicated reasons said systems are particularly expensive both in their frabrication than in its management because it is necessary to provide constantly to an extraordinary management service for interventions and part replacement and also referring to the high drains caused by energy leakages that happen in the same. Moreover it is to add that, since the systems are not constantly controlled in a specific way, they are sometimes subjected to lamps theft or sockets damaging.

The aim of the present invention is to provide a grave slabs lighting system for cemetery burial niches which does not have the aforesaid disadvantages.

With this aim in view, according to the present invention, there is provided a grave slab lighting system for cemetery burial niches, characterized by supply means of electric energy from a public delivery point to a diffuser system, said system distributing the radiation delivered by an artificial light source on a first end of some optical fibers which pass through distribution ducts disposed on one or more raceways provided on a wall part of neighbouring burial niche groups and such that a second end of each fiber lights respectively a grave slab, said fiber second end emerging at

In order to provide a better understanding of the present invention a preferred embodiment will now be described, purely by way of non-limiting example, with reference to the appended drawings, in which:
Figure 1 is a perspective and partially-sectioned view of a system formed in accordance with the scope of the present invention;
Figure 2 is a schematic view of a circuit of optical fibers of the system illustrated in Figure 1; and
Figure 3 is a view of cemetery burial niches provided with two systems of the Figure 1.

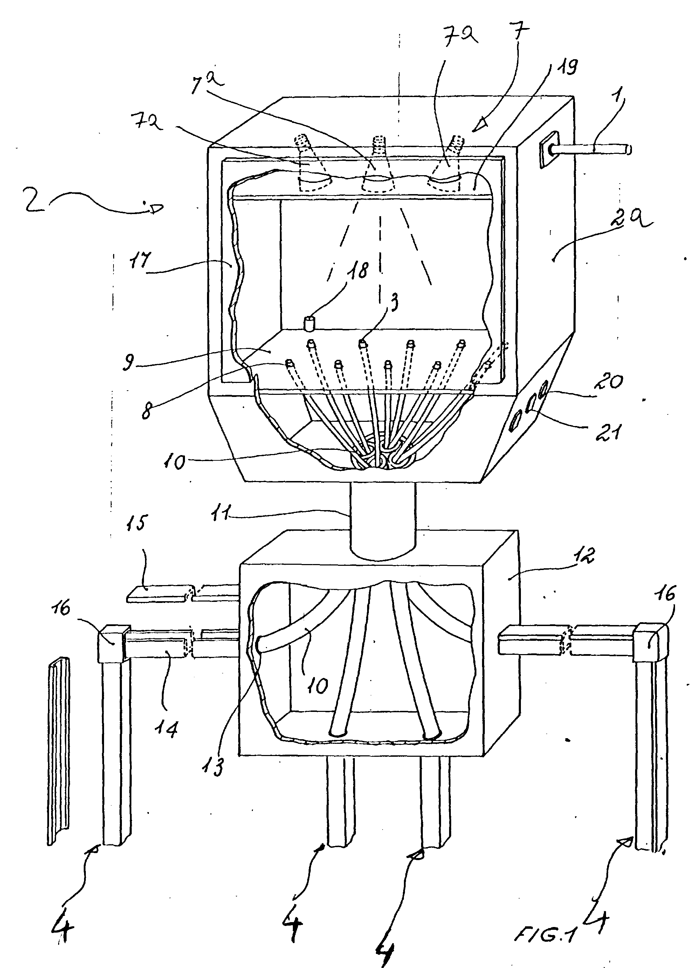

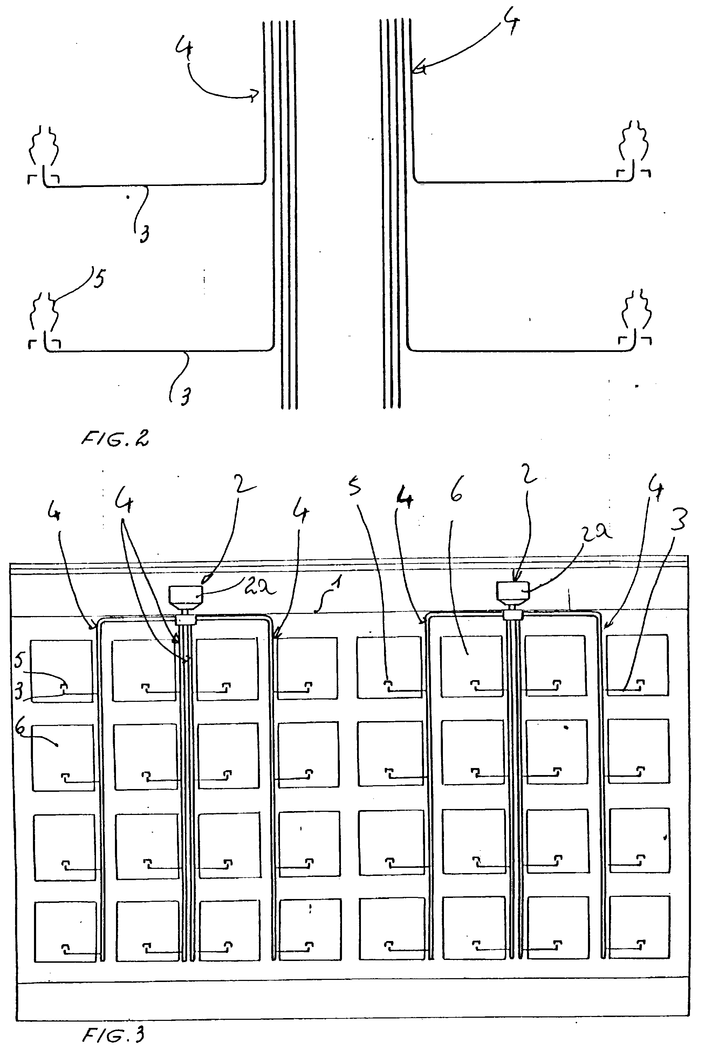

With reference to Figures 1, 2 and 3, number 2 indicates a diffuser system for lighting cemetery burial niches with light sources. A feed network 1 brings the electric energy from the public delivery point to the diffuser system 2. With reference to figures 1, 2 and 3, the diffuser system 2 includes:
a light source 7 fed by the network 1 and having one or more electric lamps 7a;
a plurality of groups of optical fibers 3 which convey the radiation delivered by the source 7 to a plurality of sockets 5; and
a first box 2a which houses the light source 7 and first ends of the optical fibers 3.

The sockets 5 are installed in correspondence of a respective grave slab 6 and work only by support to the second ends of the optical fibers 3 which light through irradiation the respective grave slabs 6.

The first box 2a presents an inner first body 9 which supports the said first ends of the optical fibers 3 and an inner second body 19 which supports the light source 7. The first ends of the optical fibers 3 extend into a space defined between the bodies 9 e 19 by some bores 8 realized on the body 9. The groups of the optical fibers 3 which originate from the box 2a are distributed in a plurality of conveyor ducts 10. The diffuser system 2 presents a distributor box 12 connected to the box 2a by a tubular junction 11 which conveys the conveyor ducts 10 to the same distributor box 12. The distributor box 12 presents a plurality of bores 13 by which the conveyor ducts 10 extend outside of the same distributor box 12. The conveyor ducts 10 are housed into respective raceways 4 having a "U" shaped holding part 14 and a cover part 15 which is mounted by pressure on the part 14 and which realizes a hydraulic seal of the raceway 4.

In the example of actualization illustrated in Figure 1 and 3, the niches are obtained in a vertical wall in a plurality of stripes and columns. In this example the diffuser system 2 lights a plurality of grave slabs 6 distributed along four columns. The box 2a and the distributor box 12 are installed in a superior zone of said wall and from the distributor box 12 originate four raceways 4, one for each column. Two raceways 4 are central and two raceways 4 are lateral. The lateral raceways 4 present a horizontal length and a vertical length connected between them through corner joints 16. In correspondence of each line of niches, from duct 10 it results at least an optical fiber 3 that extends outside the correspondent raceway 4 and that steers toward the respective socket 5. The box 2a presents an anterior handhole 17 to reach its inside for the control and maintenance works. When a light point is excluded from the lighting, it is provided a cap 18 that in use covers the first end of the optical fiber 3. In a productive solution the light source 7 comprise more lamps 7a of which only one is activated. In case of damage of the lamps 7a it is provided the feeding of a supply lamp 7a by an automatic device working in an operative power plant and/or by a manual device. When a damage signalling arrives at the operative power plant, the automatic device provide to operate the starting of the supply lamp 7a. The manual device includes a warning light 20 installed on an external side of the box 2a and fitted to signal the damage of the activated lamp 7a, and a push-button 21 it too installed on the external side of the box 2a and by pressing which the operator controls the feeding of the supply lamp 7a. Particularly it is permitted the automatic check and management of the plant from a station using an optical fiber inserted into a diffuser system 2 that transmits signals to a suitable electronic device which sends triggers for the optical fiber opening or closing so to permit to activate only the use light points and vice versa to put off the drive. In the automatic plant it is provided on the diffuser system 2 a series of three lamps 7a one of that is activated by means of an automatic device which provides, in case of its fault, to change the same with another one of the series so to permit to avoid the occasional intervention because the fault lamp could be changed during the routine inspection.

The invented system, by means of a new project that integrally replaces the illumination realized with lamps by means of electric mains with other one using luminosity conductors, determines a new plant engineering that principally avoids: a) the necessity to provide to the current transformation; b) to prepare electric joints or hookups; c) the use of electric contact sockets and of lamps; d) running interruptions owing to faults; e) the possibility to have differentiated luminous intensity; f) the possibility of field discharges; g) the electric creepage and at last h) the possible theft of the used lamps. The system uses the long and thin wires properties of transparent substances said "optical fibers", such as glass or plexiglas, with level ends to converge with high efficiency a luminous radiation flux from one of their end to the other one exploited the total internal reflection phenomena.

In the different versions the diffuser, the distributor, the risers shape and number and the activating and working means could be differently realized. In particular said plants could be provided completely or in part of tubes with opening parts to permit working. The same could be provided completely or in part on walls so to permit a total adjustment of the invented system to the existing cemetery burial buildings.

## Claims

1. Grave slab lighting system for cemetery burial niches, characterized by supply means of electric energy from a public delivery point to a diffuser system (2), said system distributing the radiation delivered by an artificial light source (7) on a first end of some optical fibers (3) which pass through distribution ducts (10) disposed on one or more raceways (4) provided on a wall part of neighbouring burial niche groups and such that a second end of each fiber lights respectively a grave slab (6), said fiber second end emerging at a socket (5).

2. Grave slab lighting system for cemetery burial niches as claimed in Claim 1 characterized by the fact that it comprises a diffuser box (2a) which houses the said light source (7) and the first ends of the said optical fibers (3), a plurality of the said raceways (4) each of which conveys at least one of the said distribution ducts (10) to the said grave slabs (6), a distributor box (12) from which the said raceways (4) originate, and a tubular conduit (11) which conveys the said distribution ducts (10) from the said diffuser box (2a) to the said distributor box (12).

3. Grave slab lighting system for cemetery burial niches as claimed in Claim 2 characterized by the fact that said raceways (4) comprises a holding part (14) and a cover part (15) which is mounted by pressure on the said holding part (14) and which realizes a hydraulic seal of the said raceways (4).

4. Grave slab lighting system for cemetery burial niches as claimed in Claim 2 characterized by the fact that said diffuser box (2a) is provided of a handhole (17) to reach its inside for the control and maintenance works.

5. Grave slab lighting system for cemetery burial niches as claimed in Claim 2 characterized by the fact that it comprises a cap (18) to cover a first end of one of the said optical fibers (3) so that to exclude lighting from the one of the said grave slabs (6).

6. Grave slab lighting system for cemetery burial niches as claimed in at least one of the preceding Claims characterized by the fact that said light source (7) comprises a plurality of lamps (7a) of that one is activated and characterized by the fact that it comprises an automatic device which provides, in case of fault of the activated lamps (7a), to change the same with another one of the said lamps (7a) so to permit to avoid the occasional intervention because the fault lamp could be change during the routine inspection.

7. Grave slab lighting system for cemetery burial niches as claimed in Claim 6 depending to Claim 2 characterized by the fact that it comprises a station for automatic check and management of the said system and using an optical fiber inserted into the said diffuser box (2a) that transmits signals to a suitable electronic device which sends triggers for the said optical fiber (3) opening or closing so to permit to activate only the use light points and vice versa to put off the drive.

8. Grave slab lighting system for cemetery burial niches as claimed in Claim 6 characterized by the fact that it comprises a warning light (20) fitted to signal the damage of the activated lamp (7a) and a push-button (21) by pressing which the operator controls the feedind of a supply lamp (7a).

## Patentansprüche

1. Beleuchtungssystem für Abschlußplatten von Friedhof-Bestattungsnischen, gekennzeichnet durch eine Versorgungseinrichtung für elektrische Energie von einem öffentlichen Einspeisungspunkt zu einem Verteilersystem (2), welches System die von einer künstlichen Lichtquelle (7) gelieferte Strahlung an ein erstes Ende von mehreren optischen Fasern (3) abgibt, die durch Verteilerleitungen (10) laufen die in einem oder mehreren Leitungskanälen (4) an einem Wandabschnitt von benachbarten Bestattungsnischen-Gruppen angeordnet sind, und zwar derart, daß ein zweites Ende jeder Faser eine jeweilige Abschlußplatte (6) beleuchtet, wobei das zweite Faserende in einem Sockel (5) austritt.

2. Beleuchtungssystem für Abschlußplatten von Friedhof-Bestattungsnischen gemäß Anspruch 1, **dadurch gekennzeichnet, daß** es einen Verteilerkasten (2a) der die Lichtquelle (7) und die ersten Enden der optischen Fasern (3) beherbergt, eine Vielzahl von Leitungskanälen (4), von denen jeder zumindest eine der Verteilerleitungen (10) zu den Grabplatten (6) führt, einen Verteilerkasten (12), von dem die Leitungskanäle (4) ausgehen, und eine röhrenförmige Leitung (11) umfaßt, die die Verteilerleitungen (10) von dem Verteilerkasten (2a) zum Verteilerkasten (12) führt.

3. Beleuchtungssystem für Abschlußplatten von Friedhof-Bestattungsnischen gemäß Anspruch 2, **dadurch gekennzeichnet, daß** die Leitungskanäle (4) einen Halteteil (14) und einen Abdeckteil (15) umfassen, der durch Druck auf dem Halteteil (14) befestigt ist und der eine wasserdichte Abdichtung der Leitungskanäle (4) erzeugt.

4. Beleuchtungssystem für Abschlußplatten von Friedhof-Bestattungsnischen nach Anspruch 2, **dadurch gekennzeichnet, daß** der Verteilerkasten (2a) mit einer Zugriffsöffnung (17) versehen ist, um sein Inneres für Überwachungs- und Wartungsarbeiten zu erreichen.

5. Beleuchtungssystem für Abschlußplatten von Friedhof-Bestattungsnischen nach Anspruch 2, **dadurch gekennzeichnet, daß** es eine Kappe (18) zur Abdeckung eines ersten Endes von einer der optischen Fasern (3) aufweist, so daß eine Beleuchtung einer der Abschlußplatten (6) unterbunden wird.

6. Beleuchtungssystem für Abschlußplatten von Friedhof-Bestattungsnischen nach einem der vorgenannten Ansprüche, **dadurch gekennzeichnet, daß** die Lichtquelle (7) eine Vielzahl von Lampen (7a) aufweist, von denen eine aktiviert ist, und **dadurch gekennzeichnet, daß** es eine automatische Vorrichtung aufweist, die im Falle eines Ausfalls der aktivierten Lampe (7a) dafür sorgt, diese mit einer anderen der Lampen (7a) auszutauschen, was es erlaubt, ein fallweises Eingreifen zu vermeiden, da die ausgefallene Lampe während der Routineinspektion ausgewechselt werden kann.

7. Beleuchtungssystem für Abschlußplatten von Friedhof-Bestattungsnischen nach Anspruch 6 in Abhängigkeit von Anspruch 2, **dadurch gekennzeichnet, daß** es eine Station zum automatischen Prüfen und Steuern des Systems und unter Verwendung einer in den Verteilerkasten (2a) eingesetzten optischen Faser umfaßt, die Signale zu einer geeigneten elektronischen Vorrichtung sendet, die wiederum Trigger-Signale zum Öffnen oder Schließen der optischen Faser (3) sendet, um so zu ermöglichen, nur die in zu verwendenden Einsatz-Lichtpunkte zu aktivieren und umgekehrt den Betrieb abzuschalten.

8. Beleuchtungssystem für Abschlußplatten von Friedhof-Bestattungsnischen nach Anspruch 6, **dadurch gekennzeichnet, daß** es ein Warnlicht (20), mit dem ein Schaden an der aktivierten Lampe (7a) signalisierbar ist, und einen Druckknopf (21) aufweist, durch dessen Drücken die Bedienungsperson die Versorgung einer Ersatzlampe (7a) steuert.

## Revendications

1. Système d'éclairage de dalles tombales pour niches funéraires de cimetières, caractérisé par des moyens d'alimentation en énergie électrique, provenant d'un point de fourniture publique, à un système de diffusion (2), ce système répartissant le rayonnement fourni par une source de lumière artificielle (7) sur une première extrémité d'une pluralité de fibres optiques (3) qui passent par des conduits de distribution (10) disposés dans un ou plusieurs guides (4) pratiqués sur une portion de paroi d'un groupe de niches funéraires voisines, et qui sont telles qu'une seconde extrémité de chaque fibre éclaire respectivement une dalle tombale (6), cette seconde extrémité de fibre émergeant d'une douille (5).

2. Système d'éclairage de dalles tombales pour niches funéraires de cimetières selon la revendication 1, caractérisé en ce qu'il comprend un boîtier de diffusion (2a) dans lequel sont logées ladite source lumineuse (7) et les premières extrémités desdites fibres optiques (3), une pluralité desdits guides (4) dont chacun amène au moins l'un desdits conduits de distribution (10) auxdites dalles tombales (6), un boîtier de distribution (12) d'où partent lesdits guides (4), et un conduit tubulaire (11) qui amène lesdits conduits de distribution (10) depuis ledit boîtier de diffusion (2a) jusqu'audit boîtier de distribution (12).

3. Système d'éclairage de dalles tombales pour niches funéraires de cimetières selon la revendication 2, caractérisé en ce que lesdits guides (4) comprennent une portion de support (14) et une portion de couverture (15) qui est montée par pression sur ladite portion de support (14) et qui assurent l'étanchéité hydraulique desdits guides (4).

4. Système d'éclairage de dalles tombales pour niches funéraires de cimetières selon la revendication 2, caractérisé en ce que ledit boîtier de diffusion (2a) comporte une ouverture (17) permettant d'en atteindre l'intérieur aux fins de contrôle et d'entretien.

5. Système d'éclairage de dalles tombales pour niches funéraires de cimetières selon la revendication 2, caractérisé en ce qu'il comprend un capuchon (18) destiné à recouvrir une première extrémité de l'une desdites fibres optiques (3) de manière à exclure l'éclairage de l'une desdites dalles tombales (6).

6. Système d'éclairage de dalles tombales pour niches funéraires de cimetières selon au moins l'une des revendications précédentes, caractérisé en ce que ladite source lumineuse (7) comprend une pluralité de lampes (7a) dont l'une est excitée et en ce qu'il comprend un dispositif automatique qui, en cas de défaillance de l'une des lampes excitées (7a), la remplace par une autre desdites lampes (7a) de manière à permettre d'éviter une intervention occasionnelle grâce au fait que la lampe défaillante peut être échangée au cours de l'inspection de routine.

7. Système d'éclairage de dalles tombales pour niches funéraires de cimetières selon la revendication 6, dépendant elle-même de la revendication 2, caractérisé en ce qu'il comprend une station pour le contrôle et l'entretien automatiques dudit système, utilisant une fibre optique insérée dans le boîtier de diffusion (2a) pour transmettre des signaux à un dispositif électronique approprié, qui déclenche l'ouverture ou la fermeture de ladite fibre optique (3), de manière à n'exciter que les points lumineux en activité, et vice et versa à les mettre hors action.

8. Système d'éclairage de dalles tombales pour niches funéraires de cimetières selon la revendication 6, caractérisé en ce qu'il comprend une lumière d'avertissement (20) prévue pour signaler une défaillance d'une lampe excitée (7a), ainsi qu'un bouton poussoir (21) par la pression duquel l'opérateur contrôle l'apport d'une lampe supplémentaire ou de remplacement (7a).
